# EUROPÄISCHE PATENTANMELDUNG

(11) **EP 2 272 646 A1**
(43) Veröffentlichungstag der Anmeldung: **12.01.2011**
(21) Anmeldenummer: 10006841.0
(22) Anmeldetag: 02.07.2010
(51) Int. Cl.: B28C 9/00, B01F 13/10, B01F 15/04, B28C 7/04, G01G 19/22

(54) **Anlage und Verfahren zur durchgehenden Herstellung vorgefertigter Betonmischungen**

(30) Priorität: 07.07.2009 IT BZ20090029
(71) Anmelder: Bezzi, Francesco, 38026 Ossana/Cusiano (IT)
(72) Erfinder: Bezzi, Francesco, 38026 Ossana/Cusiano (IT)
(74) Vertreter: Oberosler, Ludwig

(57) **Zusammenfassung**

Anlage für die durchgehende Herstellung von vorgefertigten Betonmischungen bestehend aus Vorratsbunkern (1, 2) für Zuschlagstoffe, für Bindemittel, für eventuelle trockene Zugaben und aus Behältern (3, 4, 5) für Wasser, Zusätze und eventuelle flüssige Zugaben, aus Wiege- und Dosiervorrichtungen (1a, 2a), aus Fördereinrichtungen für die einzelnen Komponenten und aus Beschickungs- und Entnahmevorrichtungen für die Mischgruppe, wobei die Mischgruppe aus zwei Mischern (M1, M2) besteht welche mit getrennten nicht überlagerten Zyklen arbeiten wobei jeder dieser von mindestens einem feststehenden Bereitschaftsbehälter (1b) für die Zuschlagstoffe, einem feststehenden Bereitschaftsbehälter (2b) für die Bindemittel und von einem Bereitschaftsbehälter für eventuelle trockene Zugaben beschickt wird, wobei die besagten Bereitschaftsbehälter (1b, 2b) mit den einzelnen aus den entsprechenden Vorratsbunkern (1, 2) entnommenen und mittels Wiegevorrichtung (1a) oder Dosiervorrichtungen dosierten Komponenten beschickt werden und wobei die Entnahme aus den besagten Bereitschaftsbehältern (1b, 2b) und die Beschickung der Mischer (M1, M2) gleichzeitig über ein Fallrohr erfolgt.

## Beschreibung

Aus der WO 2007/144844 (Pessin) ist eine Anlage zur durchgehenden Herstellung von flüssigem Mörtel oder von homogenisiertem Injektionsmörtel für das Pumpsystem von Förderbohrungen bekannt. Dieses Verfahren stellt sich die Aufgabe der durchgehenden Herstellung eines flüssigen Mörtels oder eines Injektionsmörtels aus einer vorbestimmten Menge fester und flüssiger Komponenten einer flüssigen Zementmischung. Die Mischer arbeiten abwechselnd derart synchronisiert, dass einer der Mischer durchgehend den homogenisierten flüssigen Mörtel für das Pumpsystem von Förderbohrungen liefert. Das System ermöglicht es die Werte der Dichte und der Zusammensetzung der Mischung auf einem vorbestimmten Stand zu halten indem andauernd die zugesetzten Mengen der festen und flüssigen Komponenten auf einfache und präzise Weise verändert werden wobei ein unbegrenztes Volumen an Mörtel geliefert werden kann.

Aus der DE 3113129 (Karmazin et al.) ist ein Verfahren zum Mischen von Wasser, Zement und Zuschlagstoffen bekannt in welchem ein erster Mischer für das Mischen von Wasser und Zement vorgesehen ist während ein zweiter Mischer für das Mischen des Produktes aus dem ersten Mischer mit direkt zugeführten Zuschlagstoffen vorgesehen ist. Das Verfahren stellt sich die Aufgabe eine Betonmischung herzustellen welche, ohne eine übermäßige Dosierung von Zement, eine gewisse Qualität erreicht.

Aus der EP 034452 ist eine Vorrichtung zum Zusammenführen einzelner rieselfähiger trockener Komponenten kleinen Gewichtes zu einer Mischung mit genauer Rezeptur bekannt. Diese Vorrichtung besteht aus einer Anzahl von Vorratsbehältern für die einzelnen Komponenten, wobei jeder der Behälter mit einer Entnahme- und Wiegevorrichtung ausgestattet ist. Die Behälter der Wiegevorrichtungen werden in einen einzigen verfahrbaren Sammelbehälter entleert welcher seinerseits alle enthaltenen Komponenten in mindestens einen Mischer entleert. Diese Vorrichtung sieht nicht das Zusetzen von Wasser, bzw. von flüssigen Zusatzstoffen und/oder Zugaben, vor so dass im Mischer eine Trockendurchmischung und nicht ein Durchkneten der trockenen Komponenten mit den flüssigen Komponenten stattfindet. Das Sammeln aller Komponenten mittels eines einzigen verfahrbaren Behälters würde, im Falle einer einzigen flüssigen Komponente, zur Folge haben, dass die trockenen Komponenten sich an der feuchten Komponente verkleben und dass sich innen am Sammelbehälter und an den Entnahme- und Fördervorrichtungen Verkrustungen bilden, wodurch der Mischvorgang, das Entleeren, die Reinigung und die Instandhaltung beeinträchtigt werden. Dadurch dass der Sammelbehälter ein gewisses Eigengewicht hat und auch die enthaltenen Komponenten ein gewisses Gewicht haben, sind die Zeiten für die Beförderung der Komponenten zum Mischer und die Zeit zum Entleeren des Behälters beachtlich. Diese Vorrichtung ist also nicht für die Zubereitung von Betonmischungen aus feuchten Zuschlägen, trockenen Bindemitteln und Wasser und/oder flüssigen Zusätzen geeignet; weiters wären die Zeiten für die Zuführung der einzelnen Komponenten zum Mischer und die Ladezeit des Mischers zu hoch für die wirtschaftliche Herstellung vorgefertigter Betonmischungen.

Zur Zeit sind die Betonmischzentralen mit Mischern ausgestattet welche ca. 2 - 3 m³ vibrierter Betonmischung pro Zyklus herstellen. Die Stundenleistung beträgt ca. 80 - 120 m³. Die Leistungsaufnahme seitens des Mischers allein beträgt ca. 90 - 160 kW. Die eingesetzten Mischer sind meist sogenannte Planetenmischer welche wegen ihrer Ausmaße teuer in der Anschaffung sind, einer täglichen eher gründlichen und kostspieligen Reinigung und einer periodischen arbeitsintensiven Wartung der Verschleißteile, bedürfen. Oft ist es problematisch und spesenaufwändig die vom Mischer aufgenommene Leistung geliefert zu bekommen, bzw. diese ist teuer insbesondere wenn es sich um Betonmischzentralen handelt welche weit von Wohnbereichen oder von Bereichen industrieller oder handwerklicher Fertigung entfernt sind.

Die bekannten Zentralen für die Fertigung von vorgefertigten Betonmischungen können sich kaum den schwankenden Anforderungen anpassen und sind nicht in der Lage ein Produkt zu liefern dessen Qualität das Resultat der präzisen Dosierung der Komponenten ist.

Die Erfindung stellt sich die Aufgabe eine Anlage und das entsprechende Verfahren zur durchgehenden Herstellung vorgemischter Betonmischungen zu schaffen deren Qualität streng vorgegeben ist, welche im Vergleich zu bekannten Anlagen bei gleicher Produktivität weniger installierte Leistung braucht, sich den Anforderungen anpassen kann und wobei zusätzlich der Aufwand betreffend Verschleiß, täglicher Reinigung, Instandhaltung und Energie, reduziert wird.

Zur Lösung dieser Aufgabe schlägt die Erfindung z.B. eine Anlage vor welche mit zwei bekannten Mischern funktioniert, wobei diese mit getrennten, phasenverschobenen, nicht überlagerten Zyklen mit einer relativ niederen Produktivität pro Stunde, z.B. von 36 - 60 m³. und einer Leistungsaufnahme, z.B. von 19 - 45 kW, arbeiten; dabei erfolgt das Wiegen der Zuschläge, der Bindemittel und der eventuellen festen Zugaben, im Bereich der Entnahme von den Bunkern oder Vorratsbehältern mit anschließendem Transfer in eigene, nach Zuschlägen und Bindemitteln getrennte, Bereitschftsbehälter welche abwechselnd über eine Fallleitung die beiden Mischer beschicken. Die getrennten Bereitschaftsbehälter verhindern, im Falle von feuchten oder nassen Zuschlägen, die Reaktion zwischen den Bindemitteln und den Zuschlägen, das Verkleben der Bindemittel an den feuchten Teilen und die Bildung einer Verkrustung innen in den Behältern und an den nachfolgenden Entnahme- und Fördervorrichtungen. Aus den selben Gründen werden sämtliche flüssigen Komponenten direkt den Mischern zugeleitet. Wegen der Arbeitsweise der Mischer gemäß getrennter und wechselnder Zyklen und wegen der zeitlichen Verschiebung der einzelnen Arbeitsphasen im Zusammenhang mit den besagten Zyklen, insbesondere sämtlicher Wiegevorgänge, Förder- und Beschickungsvorgänge, Mischvorgänge und Entladevorgänge, bezogen auf jeden der Mischer, kann die Anlage so betrieben werden, dass die vorgemischte Betonmischung durchgehend entnommen werden kann. Dadurch dass während des Arbeitszyklus welcher die Beschickung, die Durchmischung und die Entleerung eines der Mischer sowie das Wiegen und den Transfer der Komponenten zu den Bereitschaftsbehältern für die festen Komponenten welche dem selben Mischer für den folgenden Zyklus zugeführt werden, und auch der Großteil des Wiegevorgangs und des Transfers der festen Komponenten zum zweiten Mischer umfasst, ist eine Beschickung der Mischer über ein Fallrohr innerhalb kurzer Zeiten und mit abwechselnd ohne Zwischenpause oder mit relativ kurzen Pausen arbeitenden Mischern, möglich. Erfindungsgemäß ist es möglich, zwecks Verhindern einer Überlagerung der Mischzeiten der beiden Mischer, die Dauer einer oder mehrerer Wiegephasen, Transportphasen, Beschickungsphasen zu verändern und/oder Pausen zwischen den Arbeitsphasen einzuschalten. Dadurch dass die beiden Mischer abwechselnd ohne Zwischenpausen arbeiten, ist es möglich eine höhere Produktivität im Vergleich mit einer traditionelle Anlage welche mit nur einem Mischer, mit eventuell doppelter Leistungsaufnahme, arbeitet zu erreichen, wobei die Frequenz der Mischphasen dieses einen Mischers von den Wiegezeiten, den Transferzeiten, den Beschickungszeiten und Entladungszeiten beeinflusst ist.

Die Erfindung schließt weiters die Möglichkeit ein, dass vor den beiden Mischern mit den entsprechenden Bereitschaftsbehältern, ein Mischer vorgesehen ist welcher von mindestens einem Bereitschaftsbehälter für die festen trockenen Komponenten beschickt wird welche von den entsprechenden Vorratsbunkern entnommen werden, gewogen werden und in den besagten Bereitschaftsbehälter geladen werden; im Falle feuchter oder nasser Komponenten hingegen sind mindestens zwei Bereitschaftsbehälter vorgesehen, einer für die feuchten und der andere für die trockenen Komponenten. In diesem Fall kann ein Vormischen der trockenen Komponenten oder ein Vormischen mit Zuführung von Wasser, von bestimmten Zusätzen und von eventuellen Zugaben erfolgen. Das Vormischen kann in relativ kurzen Zeiten durchgeführt werden wobei di intensive Durchmischung anschließend in den zwei Mischern stattfindet oder eine Mischen durch autonome Mittel während der Verladung und des Transportes zur Baustelle erfolgt, das besagte Vormischen kann eventuell sich vollständig oder teilweise mit der Mischphase eines der nachfolgenden Mischer überlagert, in diesem Fall ist eine höhere Leistungsaufnahme gegeben. Dieses System ermöglicht eventuell, indem die beiden Bereitschaftsbehälter mit den entsprechenden folgenden Mischern ausgeschalten werden, auch die durchgehende Herstellung vorgefertigter Betonmischungen auf traditionelle Art welche direkt vom Mischer entladen werden welcher in diesem Fall eine Durchmischung der dosierten Komponenten durchführt welche durch nachfolgende Bearbeitungen (z.B. mittels Transportbetonmischer) vervollständigt werden. Das selbe System ermöglicht auch die Entnahme dosierter Komponenten, ohne diese in der Anlage zu durchmischen, wobei die Durchmischung auf Transportmitteln oder auf der Baustelle durchgeführt wird.

Die Erfindung wird anschließend anhand zweier vorzuziehender, in den beigelegten Zeichnungen schematisch dargestellter, Ausführungsbeispiele einer erfindungsgemäßen Anlage für die Herstellung von vorgefertigten Betonmischungen und anhand eines Schaubildes welches die einzelnen Phasen des Herstellungsverfahrens zeigt, näher erklärt.

La Fig. 1 ist die schematische Darstellung einer erfindungsgemäßen Anlage mit zwei abwechselnd arbeitenden Mischern.

Die Fig. 2 ist die schematische Darstellung einer erfindungsgemäßen Anlage mit zwei abwechselnd arbeitenden Mischern welche nach einem einzelnen, aus zwei Bereitschaftsbehältern gespeistem, Mischer vorgesehen sind.

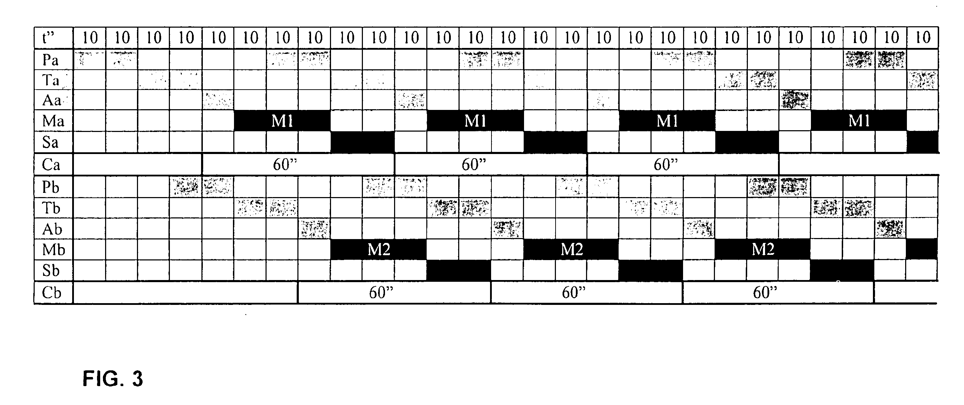

La Fig. 3 ist ein Schaubild welches die verschiedenen Phasen des Herstellungsverfahrens der in Fig. 1 gezeigten Anlage darstellt, dabei ist die technisch definierte Dauer der Misch- und Entladephasen der beiden Mischer schwarz dargestellt und die, eventuell veränderbare, Dauer der Wiege-, Transfer- und Beschickungsphasen, grau dargestellt.

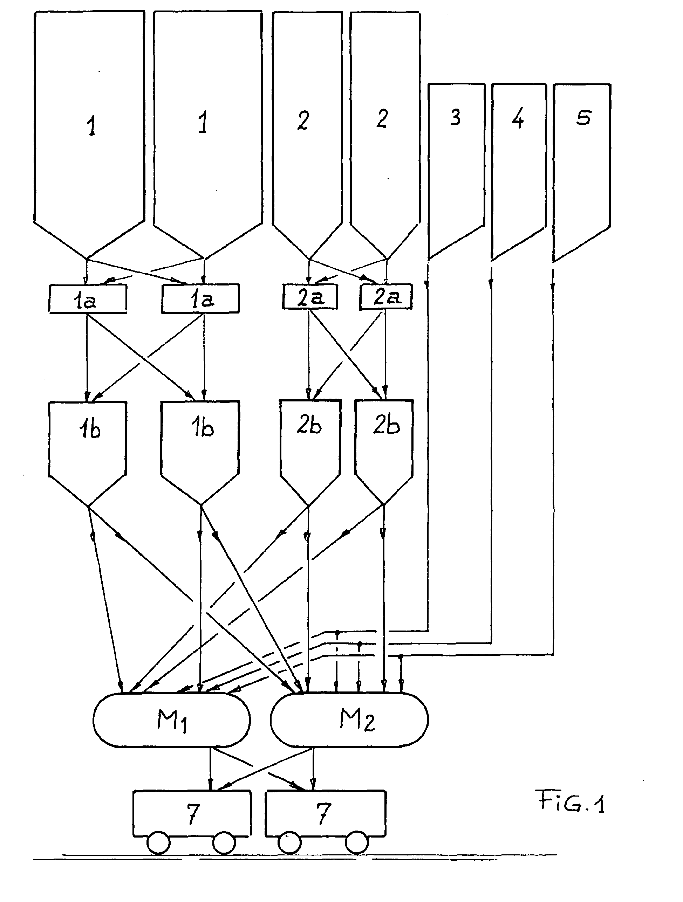

Bei der in Fig. 1 schematisch dargestellten Anlage werden die Zuschläge mit unterschiedlicher Körnung aus den verschiedenen Vorratsbunkern 1 entnommen und mittels Wiegeeinrichtungen 1a dosiert, gleichzeitig werden die Bindemittel aus den Vorratsbunkern 2 entnommen und mittels Wiegeeinrichtungen 2a dosiert. Vom Entnahme- und Wiegebereich werden die Komponenten, z.B. mittels Förderband, Skip oder Förderschnecke zu den entsprechenden Bereitschaftsbehälter 1b für die Zuschläge und 2b für die Bindemittel gebracht. Die dosierten Komponenten gelangen gleichzeitig über ein Fallrohr von den Bereitschaftsbehältern 1b, 2b innerhalb kürzester Zeit in die darunter, vorgesehenen Mischer M1, M2. Erst innerhalb dieser Mischer werden das im Behälter 3 bereitgehaltene Wasser, die in einem oder in mehreren Behältern 4 gelagerten Zusätze und in einem oder mehreren Behältern 5 gelagerte Zugaben, zugesetzt. Am Ende der Mischphase wird der vorgefertigte und vorgemischte Beton auf Transportmittel (Transportbetonmischer, Lastwagen, Förderbänder) oder in Vorrats- oder Bereitschaftsbunker geladen. Das Herstellungsverfahren einer gemäß Fig. 1 strukturierten Anlage gründet auf der abwechselnden Arbeitsweise der beiden unter sich identischen Mischer M1, M2, auf der Überlagerung der Arbeitsphasen (Pa, Ta) betreffend die festen Komponenten welche während der Arbeitsphase Ca des Mischers M1 für die folgende Arbeitsphase Ca des selben Mischers M1 bestimmt ist und auf der weiteren Überlagerung der obgenannten Arbeitsphasen mit mindestens einem Teil der Arbeitsphasen (Pa, Ta) betreffend die festen Komponenten welche für den Mischer M2 bestimmt sind. Die Mischphasen Ma, Mb der beiden Mischer sind um die Dauer der Mischzeit Ma, Mb (30") verschoben. Auf diese Weise werden die Mischphasen Ma, Mb nicht überlagert und somit ist die aufgenommene Leistung wesentlich von der aufgenommenen Leistung nur eines der Mischer M1, M2 bestimmt.

Die einzelnen Arbeitszyklen Ca betreffend den Mischer M1 umfassen:
- die Beschickungsphase Aa (10") des Mischers M1 (über Fallrohr) mit festen Komponenten (Zuschläge, Bindemittel, eventuelle Zugaben) welche bereits abgewogen Pa (20") sind, weitertransportiert Ta (20") worden sind und innerhalb der Bereitschaftsbehälter 1b, 2b vorliegen,
- die Mischphase Ma (30") im Mischer M1,
- die Entladephase Sa (20") des Mischers M1.

Nach dem ersten Teil (10") der Mischphase Ma überlagern sich die Wiegephase Pa (20") und Transportphase Ta (20") der festen Komponenten in Richtung Bereitschaftsbehälter 1b, 2b welche bereitstehen um mit der Beschickungsphase Aa (10") den folgenden Arbeitszyklus Ca des selben Mischers M1 beginnen zu können. Die einzelnen Arbeitsphasen der Arbeitszyklen Cb des zweiten Mischers M2 überlagern sich nicht mit den Arbeitsphasen der Arbeitszyklen Ca des ersten Mischers M1, welche identisch betreffend die Art und die Dauer sind, mit einer zeitlichen Verschiebung gleich der Dauer (30") der Mischphase Ma, Mb um zu verhindern dass die Mischer M1, M2 gleichzeitig arbeiten und die doppelte Leistung aufnehmen.

Wegen der obgenannten Nicht-Überlagerung der Zeiten für die Ausführung der verschiedenen Arbeitsphasen der verschobenen Arbeitszyklen und insbesondere weil der Großteil des Wiegevorganges und des Transfers der Komponenten, welche für einen der Mischer bestimmt sind, während der Mischphase des anderen Mischers stattfindet, wird eine Leistung erreicht welche, im Vergleich mit einer traditionellen Anlage mit einem einzigen Mischer und viel höherer Leistungsaufnahme, eindeutig höher ist.

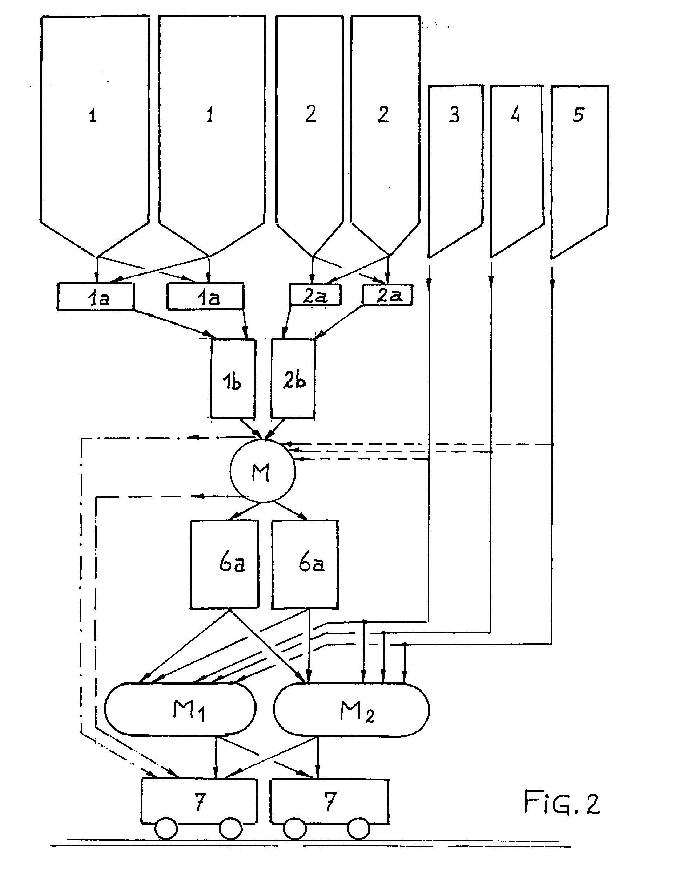

In der Anlage welche schematisch in Fig. 2 gezeigt ist, ist vor den Bereitschaftsbehältern 6a für die Beschickung der Mischer M1, M2 eine Vormischung mittels Mischer M vorgesehen welcher von den Bereitschaftsbehältern 1b, 2b beschickt wird, in welche vorher die Komponenten (Zuschläge, Bindemittel, trockene Zugaben) aus den Vorratsbunkern 1, 2, infolge Dosierung auf den Waagen 1a, 2a, zugeführt werden. In diesem Fall kann das Vormischen trocken oder unter Zuführung flüssiger Komponenten (Wasser, Zugaben, Zusätze) aus den Behältern 3, 4, 5 erfolgen.

Im Falle einer trockenen Vormischung erfolgt der Zusatz der, in den Behältern 3, 4, 5 gelagerten, Flüssigkeiten innerhalb der Mischer M1, M2.

Diese Anlage kann auf drei unterschiedliche Weisen arbeiten:
- als Produktionsanlage mit Vormischung welche vor den beiden Mischern M1, M2 erfolgt;
- als Produktionsanlage gemäß der in Fig. 1 gezeigten Anlage mit zwei Mischern M1, M2, wobei die Vormischung übersprungen (Bypass) wird;
- als traditionelle Anlage mit Ausschluss der beiden Mischer M1, M2, wobei der Mischer M die Herstellung der vorgefertigten Betonmischung übernimmt;
- als traditionelle Anlage mit Ausschluss sämtliche Mischer M, M1, M2, wobei die dosierten Komponenten ausgegeben werden, deren Weiterverarbeitung (mischen, kneten) durch autonome Mittel während des Transports oder auf der Baustelle erfolgt.

Die erfindungsgemäße Anlage ermöglicht, zwecks Optimierung des Energieverbrauchs oder bei Ausfall eines der Mischer M1, M2, die Verarbeitung der Komponenten und die Herstellung von Betonmischung weil jeder der Zyklen Ca, Cb der Mischer M1, M2, was den Wiegevorgang, den Transfer, die Beschickung und die Entnahme der Komponenten betrifft, autonom ist; natürlich ist in einem solchen Fall die Leistung der Anlage gleich jener des einen arbeitenden Mischers.

## Patentansprüche

1. Anlage für die durchgehende Herstellung von vorgefertigten Betonmischungen bestehend aus Vorratsbunkern (1, 2) für Zuschlagstoffe, für Bindemittel, für eventuelle trockene Zugaben und aus Behältern (3, 4, 5) für Wasser, Zusätze und eventuelle flüssige Zugaben, aus Wiege- und Dosiervorrichtungen (1a, 2a), aus Fördereinrichtungen für die einzelnen Komponenten und aus Beschickungs- und Entnahmevorrichtungen für die Mischgruppe, **dadurch gekennzeichnet, dass** die Mischgruppe aus zwei Mischern (M1, M2) besteht welche mit getrennten nicht überlagerten Zyklen arbeiten wobei jeder dieser von mindestens einem feststehenden Bereitschaftsbehälter (1 b) für die Zuschlagstoffe, einem feststehenden Bereitschaftsbehälter (2b) für die Bindemittel und von einem Bereitschaftsbehälter für eventuelle trockene Zugaben beschickt wird, dass die besagten Bereitschaftsbehälter (1 b, 2b) mit den einzelnen aus den entsprechenden Vorratsbunkern (1, 2) entnommenen und mittels Wiegevorrichtung (1a) oder Dosiervorrichtungen dosierten Komponenten beschickt werden und dass die Entnahme aus den besagten Bereitschaftsbehältern (1b, 2b) und die Beschickung der Mischer (M1, M2) gleichzeitig über ein Fallrohr erfolgt.

2. Anlage für die durchgehende Herstellung von vorgefertigten Betonmischungen gemäß Anspruch 1, **dadurch gekennzeichnet, dass** die Wiege- oder Dosierungsvorgänge für die verschiedenen festen Komponenten gleichzeitig im Entnahmebereich der einzelnen Vorratsbunker (1, 2) und der einzelnen Behälter (3, 4, 5) der Komponenten mittels bekannter Wiege- oder Dosierungsvorrichtungen (1a, 2a) erfolgen und dass die dosierten Mengen der gleichartigen festen Komponenten mittels spezifischer Fördereinrichtung für jede der Komponenten zu mindestens einem Bereitschaftsbehälter (1b, 2b) befördert werden.

3. Anlage für die durchgehende Herstellung von vorgefertigten Betonmischungen gemäß Anspruch 1, **dadurch gekennzeichnet, dass** die dosierten Mengen der gleichartigen festen Komponenten, im Falle trockener Komponenten, nach den Wiege- oder Dosierungsvorrichtungen, in mindestens einen gemeinsamen Bereitschaftsbehälter befördert werden oder, im Falle feuchter Komponenten, diese in mindestens einen Vorratsbehälter befördert werden während die trockenen Komponenten in mindestens einen anderen Vorratsbehälter (2b) befördert werden.

4. Anlage für die durchgehende Herstellung von vorgefertigten Betonmischungen gemäß Anspruch 1, **dadurch gekennzeichnet, dass** vor den Mischern (M1, M2) samt Vorratsbehälter (6a) ein Mischer (M) vorgesehen ist welcher von mindestens einem Bereitschaftsbehälter (1 b, 2b) beschickt wird und dass dieser Mischer nur mit festen Komponenten beschickt wird oder auch mit flüssigen dosierten, direkt von den Vorratsbehältern (3, 4, 5) zugeführten, Komponenten beschickt werden kann.

5. Verfahren für die durchgehende Herstellung vorgefertigter Betonmischungen mittels einer Anlage gemäß Anspruch 1 bis 4, **dadurch gekennzeichnet, dass** die Mischphasen (Ma, Mb) der Mischer (M1, M2) abwechselnd und als getrennte Zyklen durchgeführt werden und dass, während des Mischzyklus (Ca, Cb) jedes einzelnen Mischers (M1, M2) welcher die Beschickungsphase (Aa, Ab), die Mischphase (Ma, Mb) und die Entladephase (Sa, Sb) umfasst, die Entnahmephase und das Wiegen/Dosieren (Pa, Pb) der festen Komponenten sowie der Transport (Ta, Tb) der Dosiseinheiten mit Beschickung des oder der entsprechenden Bereitschaftsbehälter (1b, 2b) vor den beiden Mischern (M1, M2) erfolgt.

6. Verfahren gemäß Anspruch 5, **dadurch gekennzeichnet, dass** vor den beiden Mischern (M1, M2) samt den entsprechenden Bereitschaftsbehältern (6a) eine Vormischphase für die festen Komponenten mit oder ohne flüssigen Komponenten erfolgt, dass die besagte Vormischphase vom Herstellungszyklus ausgeschlossen werden kann indem der Mischer (M) umgangen wird, dass die Arbeitszyklen (Ca, Cb) der beiden Mischer (M1, M2) nicht durchgeführt werden um den Mischer (M) für die Herstellung vorgefertigter, eventuell auch vorgemischter, Betonmischungen zu nutzen oder dass sämtliche Mischer (M, M1, M2) nicht in Betrieb genommen werden um die dosierten Komponenten zu liefern welche durch autonome Mittel, während des Transports oder an der Baustelle, weiterverarbeitet (gemischt und geknetet) werden.
